# EUROPÄISCHE PATENTSCHRIFT

(11) **EP 3 488 607 B1**
(45) Veröffentlichungstag und Bekanntmachung des Hinweises auf die Patenterteilung: **08.09.2021**
(21) Anmeldenummer: 17754251.1
(22) Anmeldetag: 04.07.2017
(51) Int. Cl.: H04N 7/18, B60R 1/00, G03B 37/00, H04N 5/232, H04N 5/347

(54) **KAMERAVORRICHTUNG ZUR AUFNAHME EINES UMGEBUNGSBEREICHS EINES EIGENEN FAHRZEUGS SOWIE VERFAHREN ZUR BEREITSTELLUNG EINER FAHRERASSISTENZFUNKTION**
CAMERA DEVICE FOR RECORDING AN ENVIRONMENTAL AREA OF A VEHICLE, AND METHOD FOR PROVIDING A DRIVER ASSISTANCE FUNCTION
DISPOSITIF DE CAMÉRA POUR L'ENREGISTREMENT D'UNE ZONE ENVIRONNEMENTALE D'UN VÉHICULE, ET PROCÉDÉ DE FOURNITURE D'UNE FONCTION D'ASSISTANCE À UN CONDUCTEUR

(30) Priorität: 22.07.2016 DE 102016213493
(43) Veröffentlichungstag der Anmeldung: 29.05.2019
(73) Patentinhaber: Conti Temic microelectronic GmbH, 90411 Nürnberg (DE)
(72) Erfinder: BREUER, Karsten, 88179 Oberreute (DE); WERTHESSEN, Boris, 88213 Ravensburg (DE); ROTHENHÄUSLER, Konrad, 88147 Achberg (DE); KRÖKEL, Dieter, 88097 Eriskirch (DE)
(74) Vertreter: Continental Corporation
(86) Internationale Anmeldenummer: PCT/DE2017/200061
(87) Internationale Veröffentlichungsnummer: WO 2018/014917

(56) Entgegenhaltungen:
- EP-A1- 1 953 698
- DE-A1-102014 215 372
- PATRICE ROULET ET AL: "Multi-task single lens for automotive vision applications", PROCEEDINGS OF SPIE, Bd. 7314, 1. Mai 2009 (2009-05-01), XP055166773, ISSN: 0277-786X, DOI: 10.1117/12.821296

## Beschreibung

Die Erfindung betrifft eine Kameravorrichtung zur Aufnahme eines Umgebungsbereichs eines eigenen Fahrzeugs. Ferner betrifft die Erfindung das Fahrzeug mit einer solchen Kameravorrichtung sowie ein Verfahren zur Bereitstellung einer Fahrerassistenzfunktion.

Zur Realisierung von Fahrerassistenzvorrichtungen, wie z. B. eine Verkehrszeichenerkennung oder eines Spurhalteassistenten benötigen Kamerasysteme einen horizontalen Bildwinkel von ca. 50 Grad und einen vertikalen Bildwinkel von ca. 30 Grad. Neue Funktionen wie die Querverkehrs- oder die Ampelerkennung beim Halten in vorderster Reihe benötigen jedoch einen deutlich größeren Sichtwinkel, um die sich beim nahen Auffahren im Peripherbereich des Bildes befindlichen Objekte erfassen zu können. Demgegenüber erfordert beispielsweise hochautomatisiertes Fahren oder ein Spurhalteassistent das Erkennen von Objekten und Fahrbahnstrukturen auch in großer Entfernung, wofür eine entsprechende Auflösung erforderlich ist.

In diesem Zusammenhang sind beispielsweise Kamerasysteme mit mindestens zwei Optroniken bekannt, welche sich zumindest im Bildwinkel und/oder in der Winkelauflösung unterscheiden, um somit den gegensätzlichen Anforderungen der Erfassung des Zentralbereichs mit großer Reichweite und der Erfassung eines Weitwinkelbereichs für die Querverkehrserkennung gerecht zu werden. So beschreibt z. B. die Druckschrift DE102004061998A1 eine Vorrichtung für ein Kraftfahrzeug mit wenigstens einer ersten Kamera und wenigstens einer zweiten Kamera, wobei die erste und die zweite Kamera in wenigstens einer Kameraeigenschaft unterschiedlich sind.

Patrice Roulet et. al. "Multi-task single lens for automotive Visionapplications", PROCEEDINGS OF SPIE, Bd. 7314, 1. Mai 2009, offenbart die Verwendung einer panamorphen Linse mit einem 4/3 Sensor. Mittels der panamorphen Linse ist es möglich verschiedene Bereiche mit unterschiedlichen Auflösungen zu erzeugen. Nachteilig an solchen Kamerasystemen sind beispielsweise die zu verarbeitenden Datenmengen sowie die erheblichen Kosten aufgrund der Mehrzahl an Optroniken, bei denen es sich um die teuersten Baugruppen eines Kamerasystems handelt.

Der Erfindung liegt die Aufgabe zugrunde, eine Kameravorrichtung zu schaffen, die eine effiziente Bildverarbeitung umsetzt und gleichzeitig die Anforderungen hinsichtlich einer detailreichen Aufnahme und möglichst großem Erfassungsbereich zur Realisierung von Fahrerassistenzvorrichtungen erfüllt.

Diese Aufgabe wird durch eine Kameravorrichtung mit den Merkmalen des Anspruchs 1, durch ein Fahrzeug mit den Merkmalen des Anspruchs 14 sowie durch ein Verfahren mit den Merkmalen des Anspruchs 15 gelöst. Vorteilhafte oder bevorzugte Ausführungsformen der Erfindung sind in den Unteransprüchen, der nachfolgenden Beschreibung und durch die Figuren dargelegt.

Es wird eine Kameravorrichtung zur Aufnahme eines Umgebungsbereichs eines eigenen Fahrzeugs vorgeschlagen. Bei dem Umgebungsbereich handelt es sich beispielsweise um einen in Fahrtrichtung des eigenen Fahrzeugs vorausliegenden, seitlichen und/oder rückwärtigen Umgebungsbereich.

Die Kameravorrichtung weist eine Optronik zur Aufnahme von mindestens einem Ausgangsbild des Umgebungsbereichs auf. Bei dem durch die Optronik mindestens einem aufgenommenen Ausgangsbild handelt es sich vorzugsweise um ein unbearbeitetes Bild.

Die Optronik umfasst eine Weitwinkeloptik. Insbesondere ist mittels der Weitwinkeloptik ein weitwinklig aufgenommenes Ausgangsbild umgesetzt. Vorzugsweise ist unter der Weitwinkeloptik ein Objektiv mit einem horizontalen und/oder vertikalen Bildwinkel von z. B. mindestens + / - 50 Grad, insbesondere von mindestens + / - 70 Grad und/oder von höchstens von + / - 80 Grad zur optischen Achse zu verstehen. Somit ist beispielsweise ein Peripherumfeld wie z. B. ein Kreuzungsbereich zur frühzeitigen Objektauswertung von kreuzenden Verkehrsteilnehmern ermöglicht.

Weiterhin umfasst die Optronik einen hochaufgelösten Bildaufnahmesensor. Mittels des hochaufgelösten Bildaufnahmesensors ist insbesondere eine Objektauswertung wie z. B. die Auswertung von Verkehrszeichen oder Fahrspuren im Fernbereich, somit insbesondere in einem Entfernungsbereich zum eigenen Fahrzeug von mindestens 50 Metern ermöglicht. Unter dem hochaufgelösten Bildaufnahmesensor ist insbesondere ein Bildaufnahmesensor mit einer Pixelanzahl von mehreren Megapixeln, beispielsweise von mindestens fünf Megapixeln, vorzugsweise von mindestens sieben Megapixeln, im Speziellen von mindestens zehn Megapixeln zu verstehen. Vorzugsweise weist der Bildaufnahmesensor eine homogene Pixel/cm-Auflösung auf.

Hochaufgelöste Bildaufnahmesensoren sind für den automobiltechnischen Einsatz insbesondere in Verbindung mit einer Weitwinkeloptik als ungeeignet eingestuft, da sie eine effiziente Verarbeitung der großen Pixelanzahl für die aufwendigen Bildverarbeitungsalgorithmen nicht zulassen.

Vor diesem Hintergrund ist die Optronik, insbesondere der Bildaufnahmesensor oder eine Bildaufbereitungseinrichtung der Kameravorrichtung ausgebildet, aus dem mindestens einen aufgenommenen Ausgangsbild ein aufbereitetes Ergebnisbild zu erzeugen, wobei das aufbereitete Ereignisbild vergleichsweise zum zugehörigen Ausgangsbild mindestens einen unveränderten Bildausschnitt und einen an den mindestens einen Bildausschnitt angrenzenden auflösungsreduzierten Restbildbereich aufweist. Unter dem unveränderten Bildausschnitt ist somit insbesondere ein Teilbildbereich des Ausgangsbilds mit unveränderter, mit anderen Worten gleichgebliebener Auflösung zu verstehen. Folglich ist insbesondere in dem Bildausschnitt eine Auflösungsreduzierung ausgeschlossen, sodass ausschließlich eine partielle Auflösungsreduzierung des aufgenommenen Ausgangsbildes erfolgt.

Im Falle einer aufgenommenen Bilderfolge ist die Optronik vorzugsweise ausgebildet, aus jedem der aufgenommenen Ausgangsbilder jeweils ein aufbereitetes Ergebnisbild zu erzeugen.

Ein wesentlicher Vorteil der partiellen Auflösungsreduzierung ist der im Durchschnitt annähernd gleiche oder geringfügig höhere Rechenaufwand für die Auswertung des gesamten Ergebnisbildes vergleichsweise zu Fahrzeugkameras, welche zur Umsetzung eines realisierbaren Bildverarbeitungsaufwands bisher deutlich geringere Auflösungsraten von z. B. maximal zwei Megapixeln aufweisen, hierdurch jedoch die Auswertung im Fernbereich nicht zulassen.

Weiterhin ist sichergestellt, dass aufgrund eines ansonsten zu hohen Rechenaufwands insbesondere nicht lediglich Teilbildbereiche des Ausgangsbildes ausgewertet werden, was möglicherweise zumindest eine verspätete Auswertung relevanter Zielobjekte zufolge haben könnte. Somit kann trotz des hochaufgelösten Bildaufnahmesensors und der Weitwinkeloptik ein Rechenaufwand realisiert werden, der das Auswerten von Zielobjekten im gesamten Ergebnisbild ermöglicht.

Demnach ist der Zielkonflikt, für die Umsetzung von Fahrerassistenzvorrichtungen einen möglichst großen Erfassungsbereich und zugleich eine ausreichende Auflösung für die Auswertung von Zielobjekten im Fernbereich mit einem realisierbaren Bildverarbeitungsaufwand zu erzielen, mit nur einer Kameravorrichtung erfüllt.

Weiterhin bemerkenswert ist einerseits das kompakte Baumaß, andererseits die erhebliche Kostenersparnis der Kameravorrichtung im Vergleich zu Kameravorrichtungen mit zwei oder gar drei Optroniken.

Vorzugsweise umfasst die Kameravorrichtung mindestens eine Fahrerassistenzvorrichtung wie z. B. einen Spurhalte- oder Abbiegeassistenzvorrichtung oder ist mit dieser verbindbar. Die Fahrerassistenzvorrichtung ist insbesondere ausgebildet, mindestens ein Zielobjekt aus dem aufbereiteten Ergebnisbild des mindestens einen Ausgangsbilds wie z. B. Fahrspuren, Ampeln, Verkehrszeichen, Fußgänger, Fahrradfahrer und/oder weitere Verkehrsteilnehmer auszuwerten und in Abhängigkeit des mindestens einen ausgewerteten Zielobjekts mindestens eine passive und/oder aktive Fahrerassistenzfunktion wie z. B. ein Abstandswarnung, eine Notbremsung oder ein autonomes Ausweichmanöver durchzuführen.

Der Bildaufnahmesensor ist ausgebildet, aus dem mindestens einen aufgenommenen Ausgangsbild das aufbereitete Ergebnisbild zu erzeugen. Somit erfolgt die Erzeugung des aufbereiteten Ergebnisbilds, folglich die Auflösungsreduzierung des Restbildbereichs des mindestens einen Ausgangsbildes mittels elektronischen Pixelbinnings und/oder Pixel-Skippings auf dem Bildaufnahmesensor. Von dem Bildaufnahmesensor wird ausschließlich ein Teilbetrag der gesamten Pixelanzahl ausgegeben, wobei der Restbetrag der Pixelanzahl ausgeblendet oder zusammengeführt wird. Der Gesamtbetrag der Pixelanzahl entspricht dem Ausgangsbild und der ausgegebene Teilbetrag dem erzeugten aufbereiteten Ergebnisbild. Somit erfolgen mit anderen Worten die Aufbereitung und die Ausgabe des Ergebnisbildes durch den Bildaufnahmesensor. Beim Pixelbinning werden benachbarte Pixel des Bildaufnahmesensors z. B. innerhalb einer Zeile und/oder einer Spalte oder in einem z. B. rechteckigen Teilbereich des Ausgangsbildes zusammengefasst und einem neuen Pixel zugeordnet. Die resultierende Pixelmatrix des auflösungsreduzierten erzeugten Ergebnisbildes weist somit insbesondere eine geringere Auflösung als das aufgenommene Ausgangsbild auf. Beim Pixel-Skipping werden Pixel im Ausgangsbild in einer festgelegten Abfolge übersprungen, sodass vorzugsweise nur ein Teilbetrag der Pixel für das Ergebnisbild übernommen wird. Auf diese Weise ist insbesondere eine geringere Auflösung des Ergebnisbildes umgesetzt und folglich eine Reduzierung der Datenmenge erzielt.

Vorzugsweise ist der mindestens eine Bildausschnitt ein um die optische Achse liegender Zentralbildabschnitt oder ein an den Zentralbildabschnitt anschließender Peripheriebildabschnitt des Ausgangsbildes. Vorzugsweise ist der Zentralbildabschnitt ein symmetrisch, im Speziellen rotationssymmetrisch zur optischen Achse angeordneter Mittenbildbereich des Sichtfelds der Kameravorrichtung. Bei dem Peripheriebildabschnitt handelt es sich insbesondere um mindestens einen der vier Randbildabschnitte des Sichtfelds der Kameravorrichtung. Somit umgibt der Peripheriebildabschnitt den Zentralbildabschnitt vorzugsweise zumindest teilweise. Besonders bevorzugt sind der Zentral- und der Peripheriebildabschnitt konzentrisch zur optischen Achse der Kameravorrichtung angeordnet. Vorzugsweise handelt es sich bei dem Zentral- und Peripheriebildabschnitt um unterschiedliche, im Speziellen um überschneidungsfreie Erfassungsbereiche des Sichtbereichs der Kameravorrichtung. Besonders bevorzugt ist das Sichtfeld der Kameravorrichtung durch den Zentral- und Peripheriebildabschnitt gebildet.

Der Zentralbildabschnitt weist z. B. einen horizontalen, alternativ oder optional ergänzend einen vertikalen Bildwinkel von + / - 25 Grad auf. Der an den Zentralbildabschnitt anschließende Peripheriebildabschnitt weist z. B. einen horizontalen, alternativ oder optional ergänzend einen vertikalen Bildwinkel von mindestens + / - 50 Grad auf.

Je weitreichender die Objektauswertung in den Fernbereich ermöglicht ist, desto zuverlässiger und vorausschauender können die Fahrerassistenzfunktionen der Fahrerassistenzvorrichtungen ausgeführt werden. Vor diesem Hintergrund sieht eine besonders bevorzugte Ausgestaltung vor, dass das aufgenommene Ausgangsbild im Zentralbildabschnitt zumindest partiell eine höhere, insbesondere mindestens eine doppelte Auflösung als im Peripheriebildabschnitt aufweist. Besonders bevorzugt nimmt die Auflösung mit betragsmäßig zunehmenden horizontalen und/oder vertikalen Bildwinkeln zumindest abschnittsweise ab. Auf diese Weise sind in dem Zentralbildabschnitt Zielobjekte sowohl im Nah-, beispielsweise im Entfernungsbereich zwischen einem und 50 Metern, als auch im Fernbereich, beispielsweise im Entfernungsbereich zwischen 50 und 500 Metern durch eine einzelne Optronik auswertbar. Da im Peripheriebildabschnitt vor allem im Nahbereich befindliche Zielobjekte, so z. B. kreuzende Fahrradfahrer im Kreuzungsbereich auszuwerten sind, ist eine bedingt durch die ungleichförmige Weitwinkeloptik geringere Auflösung für die Objektauswertung möglich.

Zur Umsetzung der zumindest partiell höheren Auflösung im Zentralbildabschnitt ist vom konstruktiven Aufbau bevorzugt, dass die Weitwinkeloptik eine ungleichförmige, insbesondere eine nicht-lineare Verzeichnung umfasst, im Speziellen als eine anamorphotische Weitwinkeloptik ausgebildet ist. Insbesondere kann mittels der ungleichförmigen Verzeichnung in Abhängigkeit von der Auflösung des Bildaufnahmesensors eine Auflösung von bis zu 50 Pixeln pro Grad erzielt werden. Auf diese Weise wird insbesondere die für die Objektauswertung im Fernbereich erforderliche Auflösung ohne eine zusätzliche Teleoptik ermöglicht.

Bei einer bevorzugten Weiterbildung weist die Weitwinkeloptik mindestens oder genau eine Linse auf, welche zumindest abschnittsweise, beispielsweise der sphärische Flächenabschnitt panamorph, im Speziellen anamorphotisch ausgebildet ist. Panamorphe, im Speziellen anamorphotische Linsen bewirken zumindest abschnittsweise eine Verzeichnung des Ausgangsbildes und ermöglichen insbesondere durch die elliptische Form eine flächenmäßig größere Abdeckung im Vergleich zu anderen Linsenformen, sodass mehr Bildpunkte pro abgebildete Zone realisierbar sind. Auf diese Weise wird im Zentralbildabschnitt trotz der Verzeichnung eine verbesserte Erkennung von Zielobjekten erreicht.

Relevante Zielobjekte im Peripheriebildabschnitt sind insbesondere bei niedrigen Fahrzeuggeschwindigkeiten im urbanen Umfeld auszuwerten, hingegen auf Außerortsstraßen bei hohen Fahrzeuggeschwindigkeiten insbesondere im Fernbereich des Zentralbildabschnitts. Vor diesem Hintergrund ist die Optronik, insbesondere die Bildaufbereitungseinrichtung z. B. ausgebildet, den Bildausschnitt als Zentralbild- oder Peripheriebildabschnitt in Abhängigkeit von einer aktuell ermittelten Fahrzeuggeschwindigkeit und/oder einem aktuell ermittelten Lenkwinkel des eigenen Fahrzeugs festzulegen. Die Fahrzeuggeschwindigkeit und/oder der Lenkwinkel ermöglichen Rückschlüsse, auf welcher Straßenkategorie sich das eigene Fahrzeug, so z. B. auf einer Innerortsstraße oder auf der Autobahn aktuell befindet. Auf diese Weise kann die erforderliche Auflösung bei der Auswertung von aktuell relevanten Zielobjekten im Peripheriebildabschnitt selbst im Falle der ungleichförmigen Optik aufrechterhalten werden.

Alternativ oder optional ergänzend ist die Optronik, insbesondere Bildaufbereitungseinrichtung ausgebildet, den Bildausschnitt als Zentralbild- oder Peripheriebildabschnitt in Abhängigkeit von einem ermittelten vorausliegenden Verkehrsraum und/oder von der Straßenkategorie, auf der sich das eigene Fahrzeug aktuell befindet, festzulegen. Durch das Ermitteln des vorausliegenden Verkehrsraums sind relevante Verkehrsbereiche mit charakteristischen Zielobjekten, so z. B. ein Kreuzungsbereich mit kreuzenden Verkehrsteilnehmern erfassbar. Bezüglich der Straßenkategorie wird beispielsweise zwischen einer Autobahn, Bundes- und/oder einer Innerortsstraße unterschieden. Durch das Ermitteln des vorausliegenden Verkehrsraums und/oder der Straßenkategorie ist es möglich, den Bildausschnitt in Abhängigkeit von der aktuellen Fahrzeugumgebung anzupassen und somit z. B. für die durch die mindestens eine Fahrerassistenzvorrichtung auszuwertenden Zielobjekte individuell auszuwählen.

Beispielsweise weist das eigene Fahrzeug eine Ortungseinrichtung wie einen GPS-Sensor auf, welche ausgebildet ist, die aktuelle Position, somit den aktuellen Standort des eigenen Fahrzeugs, in dem die Kameravorrichtung integrierbar bzw. integriert ist, zu bestimmen. Weiterhin umfasst das eigene Fahrzeug beispielsweise einen fahrzeuginternen Navigationsdatenserver zum Abrufen von elektronischem Kartenmaterial. Vorzugsweise ist eine Auswerteeinheit des eigenen Fahrzeugs ausgebildet, mittels der bestimmten Position des eigenen Fahrzeugs sowie mittels Informationsdaten des elektronischen Kartenmaterials den vorausliegenden Verkehrsraum und/oder die Straßenkategorie ausgehend von der aktuellen Position des eigenen Fahrzeugs auszuwerten und den ausgewerteten Verkehrsraum bzw. die Straßenkategorie an die Bildaufbereitungseinrichtung zu übermitteln.

Einen weiteren Gegenstand der Erfindung betrifft ein Fahrzeug mit einer Kameravorrichtung nach der vorhergehenden Beschreibung.

Ferner betrifft die Erfindung ein Verfahren zur Bereitstellung einer Fahrerassistenzfunktion von mindestens einer Fahrerassistenzvorrichtung eines eigenen Fahrzeugs. In einem ersten Schritt wird mindestens ein Ausgangsbild des Umgebungsbereichs mit einer Kameravorrichtung nach der vorhergehenden Beschreibung aufgenommen. In einem nächsten Schritt wird durch die Optronik, insbesondere von dem Bildaufnahmesensor und/oder der Bildaufbereitungseinrichtung der Kameravorrichtung aus dem mindestens einen Ausgangsbild ein aufbereitetes Ergebnisbild erzeugt. Das aufbereitete Ergebnisbild weist vergleichsweise zum zugehörigen Ausgangsbild mindestens einen unveränderten Bildausschnitt und einen an den mindestens einen Bildausschnitt angrenzenden auflösungsreduzierten Restbildbereich auf. Aus dem mindestens einen aufbereiteten Ergebnisbild wird mindestens ein Zielobjekt ausgewertet. Die Auswertung des mindestens einen Zielobjekts erfolgt insbesondere durch die mindestens eine Fahrerassistenzvorrichtung der Kameravorrichtung. Vorzugsweise wird auf Basis des mindestens einen ausgewerteten Zielobjekts eine Fahrerassistenzfunktion, so z. B. eine Brems-, Warn- und/oder eine Lenkassistenz ausgeführt.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Draufsicht ein Fahrzeug umfassend eine Kameravorrichtung;
- Figuren 2, 3: jeweils ein Ausführungsbeispiel eines aufbereiteten Ergebnisbildes mit einem unveränderten Bildausschnitt und einem an den Bildausschnitt angrenzenden auflösungsreduzierten Restbildbereich;
- Figur 4: in einem Diagramm einen Auflösungsverlauf in Abhängigkeit eines horizontalen Bildwinkels von jeweils zwei Optroniken eines Kamerasystems bekannt als Stand der Technik;
- Figur 5: in einem Diagramm den Auf lösungsverlauf des Ergebnisbildes entsprechend dem Ausführungsbeispiel aus Figur 2;
- Figur 6: in einem Diagramm den Auf lösungsverlauf des Ergebnisbildes entsprechend dem Ausführungsbeispiel aus Figur 3;
- Figur 7: in einem Diagramm den Auf lösungsverlauf des Ergebnisbildes entsprechend dem Ausführungsbeispiel aus Figur 5, wobei das zugehörige Ausgangsbild mit einer Kameravorrichtung umfassend eine anamorphotische Optik aufgenommen wurde.

Einander entsprechende Teile sind in allen Figuren mit denselben Bezugszeichen versehen.

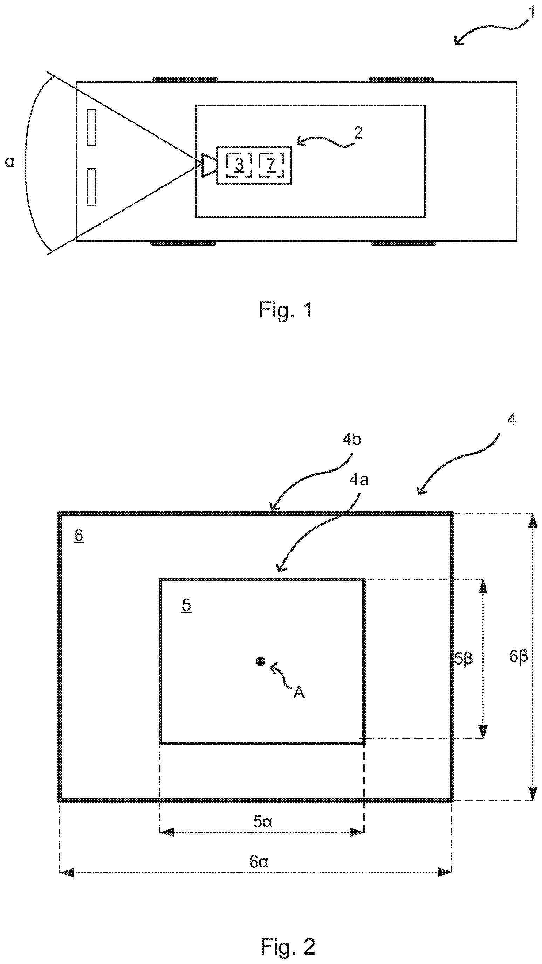

Figur 1 zeigt in einer schematischen Darstellung ein Fahrzeug 1 mit einer Kameravorrichtung 2 zur Aufnahme eines vorausliegenden Umgebungsbereichs. Bei diesem Ausführungsbeispiel ist die Kameravorrichtung 2 eine im Innenraum des eigenen Fahrzeugs 1 hinter der Windschutzscheibe angeordnete und in Fahrtrichtung des eigenen Fahrzeugs 1 gerichtete Kamera. Insbesondere ist die Kameravorrichtung 2 als eine Monokameravorrichtung 2 mit genau einer Optronik 3 ausgebildet.

Die Optronik 3 der Kameravorrichtung 2 ist ausgebildet, mindestens ein Ausgangsbild des vorausliegenden Umgebungsbereichs aufzunehmen. Zur Aufnahme des Ausgangsbilds umfasst die Optronik eine Weitwinkeloptik und einen hochaufgelösten Bildaufnahmesensor.

Die Weitwinkeloptik weist z. B. einen horizontalen und/oder vertikalen Bildwinkel α, β von + / - 50 Grad zur optischen Achse A auf. Mittels der Weitwinkeloptik ist eine frühzeitige Auswertung von Zielobjekten wie z. B. kreuzenden Verkehrsteilnehmern ermöglicht.

Der Bildaufnahmesensor weist z. B. eine Auflösung von mindestens fünf, insbesondere von mindestens sieben, im Speziellen von mindestens zehn Megapixeln auf. Diese Auflösung realisiert die Auswertung von Zielobjekten auch im Fernbereich.

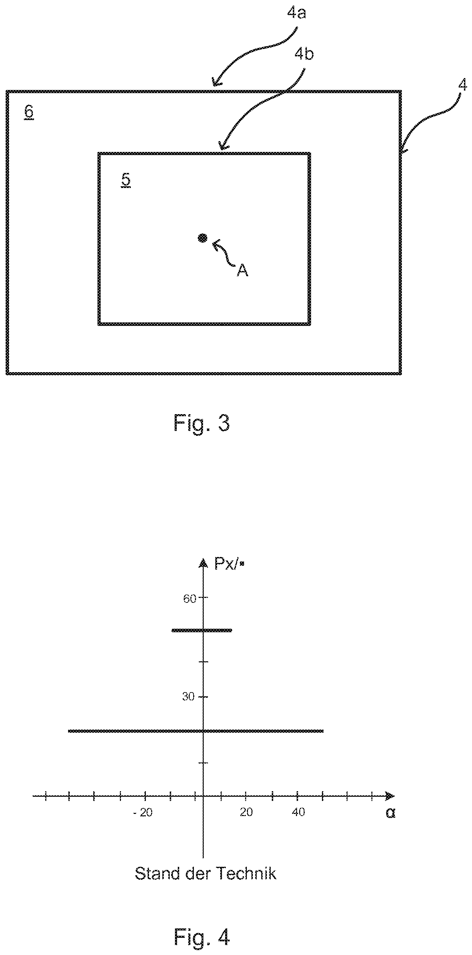

Auf diese Weise kann z. B. auf kostenintensive multiple Optroniken, welche insbesondere zur Auswertung entweder des Randbild- oder des Zentralbildabschnitts vorgesehen sind (Figur 4), verzichtet werden.

Somit ist die Kameravorrichtung 2 einerseits mit einem weitwinkligen Erfassungsbereich ausgebildet, welcher beispielsweise für die frühzeitige Erkennung von kreuzenden Verkehrsteilnehmern im Kreuzungsbereich oder auch für die Ampelerkennung in vorderster Reihe erforderlich sein kann. Andererseits ist das mindestens eine Ausgangsbild hochaufgelöst umgesetzt, sodass Zielobjekte sowohl im Nah-, beispielweise im Entfernungsbereich zwischen einem und 50 Metern, als auch im Fernbereich, beispielsweise im Entfernungsbereich zwischen 50 und 500 Metern auswertbar sind. Folglich ist das Zielkonflikt des Weitwinkel- und Telebereichs unter Verwendung einer einzelnen Optronik 3 gelöst.

Ein solches Ausgangsbild übersteigt jedoch eine Datenmenge, die eine Bildauswerteeinrichtung, im Speziellen ein insbesondere im Automobilbereich verwendeter Prozessor zur Auswertung der Zielobjekte verarbeiten kann.

Die Optronik 3, insbesondere der Bildaufnahmesensor oder eine Bidlaufbereitungseinrichtungder Optronik 3 ist ausgebildet, aus dem mindestens einen aufgenommenen Ausgangsbild ein aufbereitetes Ergebnisbild 4 zu erzeugen. Vorzugsweise ist der Sichtbereich des Ergebnisbilds 4 unverändert zu dem Sichtbereich des Ausgangsbilds.

Das aufbereitete Ergebnisbild 4 weist vergleichsweise zum zugehörigen Ausgangsbild mindestens einen unveränderten Bildausschnitt 4a und einen an den mindestens einen Bildausschnitt angrenzenden auflösungsreduzierten Restbildbereich 4b auf. Hierdurch liegt insbesondere eine verrechenbare Datenmenge für die im eigenen Fahrzeug 1, im Speziellen in der Kameravorrichtung 2 verbaute Bildauswerteeinrichtung vor. Weiterhin wird mit nur einer Kameravorrichtung 2 die Objektauswertung im Zentral- sowie im Peripherumfeld des eigenen Fahrzeugs 1 in verschiedenen Entfernungsbereichen erzielt.

Des Weiteren umfasst die Kameravorrichtung 2 z. B. mindestens eine Fahrerassistenzvorrichtung 7 mit der Bildauswerteeinrichtung, welche insbesondere ausgebildet ist, aus dem von der Optronik 3 aufbereiteten Ergebnisbild 4 Zielobjekte auszuwerten und auf Basis der ausgewerteten Zielobjekte mindestens eine Fahrerassistenzfunktion auszuführen.

Vorzugsweise wird aus dem aufbereiteten Ergebnisbild 4 eine Hierarchie, auch als Pyramidenstruktur bekannt, an Bildern mit verschiedener Auflösung berechnet. Beispielsweise werden mindestens drei Bilder mit einer jeweils um eine Hälfte niedrigeren Auflösung bereitgestellt. Insbesondere wird durch die Bildauswerteeinrichtung zunächst das niedrigste aufgelöste Bild zur Objekterkennung abgefragt, um den Rechenaufwand möglichst gering zu halten. Sollte durch die Bildauswerteeinrichtung in dem niedrigsten aufgelösten Bild ein Zielobjekt erkannt werden, wird vorzugsweise auf die nächsthöher auflösende Darstellung zurückgegriffen, um insbesondere die Objekterkennung zu validieren.

Die Auflösungsreduzierung des aufgenommenen Ausgangsbilds erfolgt mittels Pixelbinnings und/oder Pixel-Skippings auf dem Bildaufnahmesensor. Unter Pixelbinning ist insbesondere eine Zusammenfassung mehrerer, beispielsweise vier physikalischen Pixeln zu einem Bildpunkt zu verstehen. Im Falle der Zusammenfassung der vier Pixel zu einem Bildpunkt ist lediglich 1/4 der physikalischen Pixelanzahl als Bildpunkte zu verarbeiten. Beim Pixel-Skipping werden Pixel im Ausgangsbild in einer festgelegten Abfolge übersprungen, sodass vorzugsweise nur ein Teilbetrag der Pixel für das Ergebnisbild übernommen wird. Auf diese Weise ist insbesondere eine geringere Auflösung des Ergebnisbildes umgesetzt und folglich eine Reduzierung der Datenmenge erzielt. Z. B. wird der mindestens eine Bildausschnitt 4a durch die Optronik 3, insbesondere durch die Bildsensoraufnahmeeinrichtung oder Bildaufbereitungseinrichtung in denjenigen Teilbildbereich des Ausgangsbildes gelegt, in dem die Objektauswertung priorisiert oder eine Auswertung in einem Entfernungsbereich von mindestens 50 Metern zu erfolgen hat.

In den Figuren 2 und 3 sind Ausführungsbeispiele eines aufbereiteten Ergebnisbilds 4 mit einem unveränderten Bildausschnitt 4a und einem an den Bildausschnitt 4a angrenzenden auflösungsreduzierten Restbildbereich 4b dargestellt.

Bei dem in Figur 2 gezeigten Ausführungsbeispiel ist der Bildausschnitt 4a ein um die optische Achse A liegender Zentralbildabschnitt 5 und der Restbildbereich 4b ein an den Zentralbildabschnitt 5 anschließender Peripheriebildabschnitt 6 des Ausgangsbildes 3. Der Zentralbildabschnitt 5 umfasst z. B. einen horizontalen und/oder vertikalen Bildwinkel 5α, 5β von + / - 25 Grad. Durch diesen Bildwinkelbereich ließe sich beispielsweise der auszuwertende Verlauf von detektierten Fahrspur/en verlängern. Der horizontale Peripheriebildabschnitt 6 umfasst insbesondere einen horizontalen und/oder vertikalen Bildwinkel 6α, 6β von + / - 50 Grad, sodass z. B. auch Kreuzungsbereiche weitflächig erfassbar sind. Rein exemplarisch umfasst der Peripheriebildabschnitt 6 jeden der vier Randbildabschnitte des aufgenommenen Ausgangsbildes.

Bei dem in Figur 3 gezeigten Ausführungsbeispiel ist der Bildausschnitt 4a der um die optische Achse A liegende Peripheriebildabschnitt 6 und der Restbildbereich 4b der Zentralbildabschnitt 5. Diese Ausgestaltung ist insbesondere von Vorteil, sollten z. B. querende Verkehrsteilnehmer und/oder die Ampelanlage in einem Kreuzungsbereich auszuwerten sein. Beispielsweise erfolgt die Festlegung des Bildausschnitts 4a als der Zentral- und/oder Peripheriebildabschnitt 5, 6 in Abhängigkeit von der Fahrzeuggeschwindigkeit, dem Lenkwinkel, dem vorausliegenden Verkehrsraum und/oder der Straßenkategorie, auf der sich das eigene Fahrzeug 1 aktuell befindet.

Da mit zunehmender Fahrzeuggeschwindigkeit z. B. für die frühzeitige Auswertung der Verkehrszeichen und/oder des Fahrspurverlaufs ebenfalls zunehmende Auflösung im Zentralbildabschnitt 5 erforderlich ist, wird vorzugsweise bei der Überschreitung eines Geschwindigkeitsgrenzwerts von z. B. 100 km/h der Bildausschnitt 4b auf den Zentralbildabschnitt 5 gelegt. Da bei niedrigeren Geschwindigkeiten für die frühzeitige Querverkehrs- und/oder Ampelerkennung zumindest eine ausreichende Auflösung im Peripheriebildabschnitt 6 sicherzustellen ist, wird beispielsweise bei der Unterschreitung eines Geschwindigkeitsgrenzwerts von z. B. 30 km/h, im Speziellen beim stehenden Fahrzeugzustand der Bildausschnitt 4a als Peripheriebildabschnitt 6 festgelegt.

In Figur 4 ist exemplarisch als bekannter Stand der Technik ein Auflösungsverlauf über den horizontalen Bildwinkel α von einem Kamerasystem umfassend zwei Optroniken aufgetragen. Eine der Optroniken umfasst eine lineare Weitwinkeloptik, die andere der Optroniken eine lineare Teleoptik, um sowohl den Fernbereich im Zentralbildabschnitt als auch einen zur Teleoptik erweiterten Sichtfeldbereich umzusetzen.

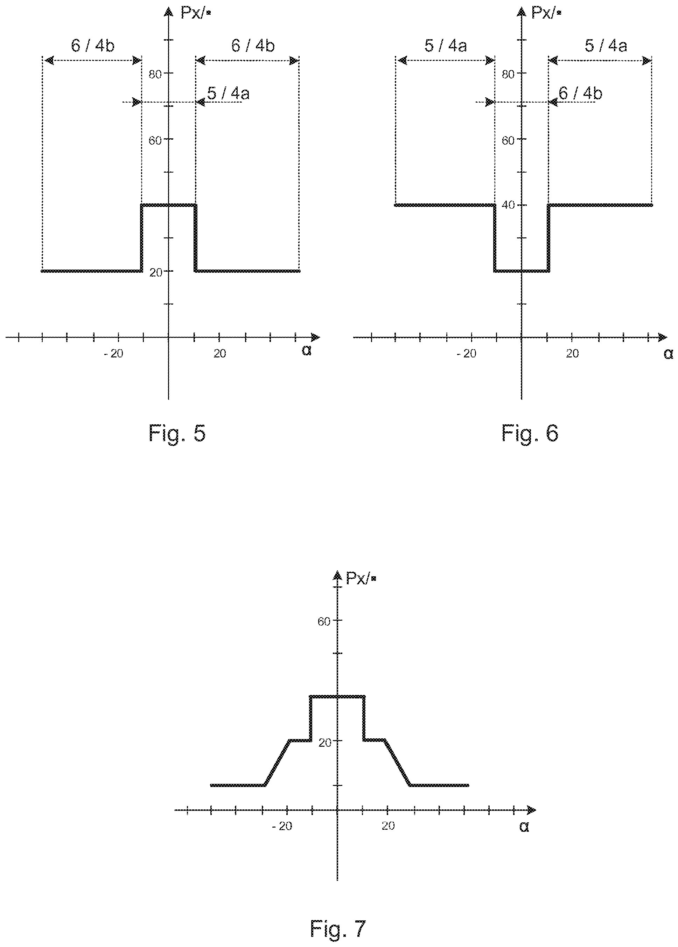

Im Vergleich hierzu ist in den Figuren 5 und 6 exemplarisch der Auflösungsverlauf über den horizontalen Bildwinkel α des durch die erfindungsgemäße Kameravorrichtung 2 erzeugten Ergebnisbildes 4 aufgetragen. Bei diesem Ausführungsbeispiel umfasst die Optronik einen hochaufgelösten Bildaufnahmesensor mit 7.23 Megapixeln in 16:9 Format und eine lineare Weitwinkeloptik mit einem horizontalen Bildwinkel α von + / - 50 Grad.

In Figur 5 entspricht der Zentralbildabschnitt 5 dem Bildausschnitt 4a, wohingegen der Peripheriebildabschnitt 6 als der auflösungsreduzierte Restbildbereich festgelegt ist. Wie in Figur 6 dargestellt, kann alternativ der Peripheriebildabschnitt 6 als der Bildausschnitt 5b festgelegt sein. Wesentlich ist insbesondere, dass im Mittel eine zumindest annähernd gleichbleibend hohe zu verarbeitende Pixelanzahl umgesetzt ist.

In Figur 7 ist exemplarisch der Auflösungsverlauf über den horizontalen Bildwinkel α des durch die erfindungsgemäße Kameravorrichtung 2 erzeugten Ergebnisbildes 4 aufgetragen. Bei diesem Ausführungsbeispiel umfasst die Optronik einen hochaufgelösten Bildaufnahmesensor mit 7.23 Megapixeln in 16:9 Format und eine anamorphotische Weitwinkeloptik mit einem horizontalen Bildwinkel α von + / - 50 Grad. Mittels der anamorphotischen Weitwinkeloptik wird vergleichsweise zu einer linearen Weitwinkeloptik die Auflösung im Zentralbildabschnitt zumindest abschnittsweise angehoben, jedoch zugleich im Peripheriebildabschnitt 6 reduziert. Eine partielle Auflösungsreduzierung im Peripheriebildabschnitt könnte daher ggf. zu einer Unterschreitung der erforderlichen Auflösung für eine zuverlässige Objektauswertung führen. Hier erweist sich die Festlegung des Bildausschnitts 4a in Abhängigkeit der aktuellen Fahrsituation wie der aktuellen Fahrzeuggeschwindigkeit oder des vorausliegenden Verkehrsraums von Vorteil, da bei dem Erfordernis einer ausreichenden Auflösung im Peripheriebildabschnitt 6 insbesondere der Bildausschnitt 4a auf diesen Teilbildbereich gelegt und somit die zuverlässige Objektauswertung sichergestellt wird.

### Bezugszeichenliste

- 1: Fahrzeug
- 2: Kameravorrichtung
- 3: Optronik
- 4: Aufbereitetes Ergebnisbild
- 4a: Bildausschnitt
- 4b: Restbildbereich
- 5: Zentralbildabschnitt
- 6: Peripheriebildabschnitt
- 7: Fahrerassistenzvorrichtung
- α: Horizontaler Bildwinkel
- β: Vertikaler Bildwinkel
- A: Optische Achse

## Patentansprüche

1. Kameravorrichtung (2) zur Aufnahme eines Umgebungsbereichs eines eigenen Fahrzeugs (1),
mit einer Optronik umfassend einen hochaufgelösten Bildaufnahmesensor und eine Weitwinkeloptik zur Aufnahme von mindestens einem Ausgangsbild des Umgebungsbereichs, wobei der Bildaufnahmesensor eine homogene Auflösung aufweist,
wobei die Optronik ausgebildet ist, aus dem mindestens einen aufgenommenen Ausgangsbild ein aufbereitetes Ergebnisbild (4) zu erzeugen,
wobei das aufbereitete Ergebnisbild (4) vergleichsweise zum zugehörigen Ausgangsbild mindestens einen unveränderten Bildausschnitt (4a) und einen an den mindestens einen Bildausschnitt (4a) angrenzenden auflösungsreduzierten Restbildbereich (4b) aufweist,
wobei der Bildaufnahmesensor ausgestaltet ist ausschließlich einen Teilbetrag der gesamten Pixelanzahl auszugeben, wobei der ausgegebene Teilbetrag dem erzeugten aufbereiteten Ergebnisbild entspricht, und wobei die Auflösungsreduzierung des Restbildbereichs mittels elektronischen Pixelbinnings und/oder Pixel-Skippings auf dem Bildaufnahmesensor erfolgt.

2. Kameravorrichtung (2) nach Anspruch 1, wobei der Bildaufnahmesensor eine Auflösung von mindestens fünf Megapixeln aufweist.

3. Kameravorrichtung (2) nach einem der vorhergehenden Ansprüche, wobei die Weitwinkeloptik einen horizontalen und/oder vertikalen Bildwinkel (α, β) von + / - 50 Grad zur optischen Achse A aufweist.

4. Kameravorichtung (2) nach einem der vorhergehenden Ansprüche, wobei der Bildaufnahmesensor ausgebildet ist, aus dem mindestens einen aufgenommenen Ausgangsbild das aufbereitete Ergebnisbild (4) zu erzeugen.

5. Kameravorrichtung (2) nach einem der vorhergehenden Ansprüche 1 bis 3, wobei die Kameravorrichtung (2) eine Bildaufbereitungseinrichtung umfasst, welche ausgebildet ist, aus dem mindestens einen vom Bildaufnahmesensor übermittelten Ausgangsbild das aufbereite Ergebnisbild (4) zu erzeugen.

6. Kameravorrichtung (2) nach einem der vorhergehenden Ansprüche, wobei der mindestens eine Bildausschnitt (4a) ein um die optische Achse liegender Zentralbildabschnitt (5) oder ein an den Zentralbildabschnitt (5) anschließender Peripheriebildabschnitt (6) ist.

7. Kameravorrichtung (2) nach Anspruch 6, wobei der Zentralbildabschnitt (5) einen horizontalen Bildwinkel (5α) von höchstens +/- 25 Grad und/oder der an den Zentralbildabschnitt (5) anschließende Peripheriebildabschnitt (6) einen horizontalen Bildwinkel (6α) von mindestens +/- 50 Grad aufweist.

8. Kameravorrichtung (2) nach Anspruch 6 oder 7, wobei das aufgenommene Ausgangsbild in dem Zentralbildabschnitt (5) zumindest partiell eine höhere, insbesondere mindestens eine doppelte Auflösung als in dem Peripheriebildabschnitt (6) aufweist.

9. Kameravorrichtung (2) nach Anspruch 8, wobei die Weitwinkeloptik eine ungleichförmige Verzeichnung umfasst, welche ausgebildet ist, die zumindest partiell höhere Auflösung in dem Zentralbildabschnitt (5) umzusetzen.

10. Kameravorrichtung (2) nach einem der vorhergehenden Ansprüche, wobei die Weitwinkeloptik mindestens oder genau eine Linse aufweist, welche zumindest abschnittsweise panamorph, im Speziellen anamorphotisch ausgebildet ist.

11. Kameravorrichtung (2) nach einem der vorhergehenden Ansprüche 6 bis 10, wobei die Optronik ausgebildet ist, den mindestens einen Bildausschnitt (4a) als den Zentralbildabschnitt (5) oder als den Peripheriebildabschnitt (6) in Abhängigkeit von einem vorausliegenden Verkehrsraum des eigenen Fahrzeugs (1) und/oder von der Straßenkategorie, auf der sich das eigene Fahrzeug (1) aktuell befindet, festzulegen.

12. Kameravorrichtung (2) nach einem der vorhergehenden Ansprüche 6 bis 11, wobei die Optronik ausgebildet ist, den mindestens einen Bildausschnitt (4a) als den Zentralbildabschnitt (5) oder als den Peripheriebildabschnitt (6) in Abhängigkeit von einer aktuell ermittelten Fahrzeuggeschwindigkeit und/oder einem aktuellen Lenkwinkel des eigenen Fahrzeugs (1) festzulegen.

13. Kameravorrichtung (2) nach einem der vorhergehenden Ansprüche, wobei die Kameravorrichtung (2) mindestens eine Fahrerassistenzvorrichtung (7) umfasst, welche ausgebildet ist, mindestens ein Zielobjekt aus dem mindestens einen aufbereiteten Ergebnisbild (4) auszuwerten und in Abhängigkeit des mindestens einen ausgewerteten Zielobjekts zumindest eine Fahrerassistenzfunktion durchzuführen.

14. Fahrzeug (1) mit einer Kameravorrichtung (2) nach einem der vorhergehenden Ansprüche.

15. Verfahren zur Bereitstellung einer Fahrerassistenzfunktion von mindestens einer Fahrerassistenzvorrichtung (7) eines eigenen Fahrzeugs (1) umfassend die Schritte:
- Aufnahme mindestens eines Ausgangsbilds eines Umgebungsbereichs des eigenen Fahrzeugs (1) mit einer Kameravorrichtung (2) nach einem der vorhergehenden Ansprüche 1 bis 13;
- Erzeugen eines aufbereiteten Ergebnisbildes (4) aus dem mindestens einen Ausgangsbild, wobei das aufbereitete Ergebnisbild (4) vergleichsweise zum zugehörigen Ausgangsbild mindestens einen unveränderten Bildausschnitt (4a) und einen an den mindestens einen Bildausschnitt (4a) angrenzenden auflösungsreduzierten Restbildbereich (4b) aufweist, wobei das Ergebnisbild ausschließlich einen Teilbetrag der gesamten Pixelanzahl aufweist, wobei der ausgegebene Teilbetrag dem erzeugten aufbereitetem Ergebnisbild entspricht und wobei die Auflösungsreduzierung des Restbildbereiches mitetls elektronischen Pixelbinnings und/oder Pixel-Skippings auf dem Bildaufnahmesensor erfolgt;
- Auswertung von mindestens einem Zielobjekt aus dem mindestens einen aufbereiteten Ergebnisbild (4).

## Claims

1. Camera apparatus (2) for recording a surrounding area of an ego vehicle (1),
having an optoelectronic system comprising a high-resolution image recording sensor and a wide-angle lens for recording at least one initial image of the surrounding area, wherein the image recording sensor has a homogeneous resolution,
wherein the optoelectronic system is designed to generate a conditioned result image (4) from the at least one recorded initial image,
wherein the conditioned result image (4) has, in comparison with the associated initial image, at least one unchanged image detail (4a) and a reduced-resolution remaining image region (4b) bordering the at least one image detail (4a), wherein the image recording sensor is configured to output exclusively a partial amount of the total number of pixels, wherein the output partial amount corresponds to the generated conditioned result image, and wherein the reduction in resolution of the remaining image region is effected by means of electronic pixel binning and/or pixel skipping on the image recording sensor.

2. Camera apparatus (2) according to Claim 1, wherein the image recording sensor has a resolution of at least five megapixels.

3. Camera apparatus (2) according to either of the preceding claims, wherein the wide-angle lens has a horizontal and/or vertical image angle (α, β) of +/- 50 degrees with respect to the optical axis A.

4. Camera apparatus (2) according to one of the preceding claims, wherein the image recording sensor is designed to generate the conditioned result image (4) from the at least one recorded initial image.

5. Camera apparatus (2) according to one of preceding Claims 1 to 3, wherein the camera apparatus (2) comprises an image conditioning device designed to generate the conditioned result image (4) from the at least one initial image transmitted by the image recording sensor.

6. Camera apparatus (2) according to one of the preceding claims, wherein the at least one image detail (4a) is a central image section (5) situated around the optical axis or a peripheral image section (6) adjacent to the central image section (5).

7. Camera apparatus (2) according to Claim 6, wherein the central image section (5) has a horizontal image angle (5α) of at most +/- 25 degrees and/or the peripheral image section (6) adjacent to the central image section (5) has a horizontal image angle (6α) of at least +/- 50 degrees.

8. Camera apparatus (2) according to Claim 6 or 7, wherein the recorded initial image has, at least partially, a higher resolution, in particular at least double the resolution, in the central image section (5) than in the peripheral image section (6).

9. Camera apparatus (2) according to Claim 8, wherein the wide-angle lens comprises a non-uniform distortion designed to implement the at least partially higher resolution in the central image section (5).

10. Camera apparatus (2) according to one of the preceding claims, wherein the wide-angle lens has at least or precisely one lens, at least sections of which are of panamorphic, specifically anamorphic, design.

11. Camera apparatus (2) according to one of preceding Claims 6 to 10, wherein the optoelectronic system is designed to define the at least one image detail (4a) as the central image section (5) or as the peripheral image section (6) on the basis of a traffic space ahead of the ego vehicle (1) and/or on the basis of the category of road on which the ego vehicle (1) is currently situated.

12. Camera apparatus (2) according to one of preceding Claims 6 to 11, wherein the optoelectronic system is designed to define the at least one image detail (4a) as the central image section (5) or as the peripheral image section (6) on the basis of a currently ascertained vehicle velocity and/or a current steering angle of the ego vehicle (1).

13. Camera apparatus (2) according to one of the preceding claims, wherein the camera apparatus (2) comprises at least one driver assistance apparatus (7) designed to evaluate at least one target object from the at least one conditioned result image (4) and to perform at least one driver assistance function on the basis of the at least one evaluated target object.

14. Vehicle (1) having a camera apparatus (2) according to one of the preceding claims.

15. Method for providing a driver assistance function of at least one driver assistance apparatus (7) of an ego vehicle (1), comprising the steps of:
- recording at least one initial image of a surrounding area of the ego vehicle (1) using a camera apparatus (2) according to one of preceding Claims 1 to 13;
- generating a conditioned result image (4) from the at least one initial image, wherein the conditioned result image (4) has, in comparison with the associated initial image, at least one unchanged image detail (4a) and a reduced-resolution remaining image region (4b) bordering the at least one image detail (4a), wherein the result image has exclusively a partial amount of the total number of pixels, wherein the output partial amount corresponds to the generated conditioned result image, and wherein the reduction in resolution of the remaining image region is effected by means of electronic pixel binning and/or pixel skipping on the image recording sensor;
- evaluating at least one target object from the at least one conditioned result image (4).

## Revendications

1. Dispositif de caméra (2) pour l'enregistrement d'une zone environnementale d'un véhicule concerné (1) équipé d'un système optoélectronique, comprenant un capteur d'enregistrement d'images à haute résolution, et d'une optique grand angle pour l'enregistrement d'au moins une image de sortie de la zone environnementale,
dans lequel le capteur d'enregistrement d'images présente une résolution homogène,
dans lequel le système optoélectronique est conçu pour générer, à partir de ladite au moins une image de sortie enregistrée, une image résultante traitée (4),
dans lequel l'image résultante traitée (4) présente, par rapport à l'image de sortie correspondante, au moins une partie d'image (4a) inchangée et une zone d'image restante (4b) à résolution réduite, adjacente à ladite au moins une partie d'image (4a),
dans lequel le capteur d'enregistrement d'images est configuré pour ne délivrer qu'une quantité partielle du nombre total de pixels, dans lequel la quantité partielle délivrée correspond à l'image résultante traitée générée,
et dans lequel la réduction de résolution de la zone d'image restante est effectuée au moyen d'un regroupement électronique de pixels et/ou d'un saut de pixels sur le capteur d'enregistrement d'images.

2. Dispositif de caméra (2) selon la revendication 1, dans lequel le capteur d'enregistrement d'images présente une résolution d'au moins cinq mégapixels.

3. Dispositif de caméra (2) selon l'une quelconque des revendications précédentes, dans lequel l'optique grand angle présente un angle d'image horizontal et/ou vertical (α, β) de +/- 50 degrés par rapport à l'axe optique A.

4. Dispositif de caméra (2) selon l'une quelconque des revendications précédentes, dans lequel le capteur d'enregistrement d'images est conçu pour générer l'image résultante traitée (4) à partir de ladite au moins une image de sortie enregistrée.

5. Dispositif de caméra (2) selon l'une quelconque des revendications précédentes 1 à 3, dans lequel le dispositif de caméra (2) comprend un dispositif de traitement d'images qui est conçu pour générer l'image résultante traitée (4) à partir de ladite au moins une image de sortie transmise par le capteur d'enregistrement d'images.

6. Dispositif de caméra (2) selon l'une quelconque des revendications précédentes, dans lequel ladite au moins une partie d'image (4a) est une partie d'image centrale (5) située autour de l'axe optique ou une partie d'image périphérique (6) adjacente à la partie d'image centrale (5) .

7. Dispositif de caméra (2) selon la revendication 6, dans lequel la partie d'image centrale (5) présente un angle d'image horizontal (5a) d'au plus +/-25 degrés et/ou la partie d'image périphérique (6) adjacente à la partie d'image centrale (5) présente un angle d'image horizontal (6a) d'au moins +/- 50 degrés.

8. Dispositif de caméra (2) selon la revendication 6 ou 7, dans lequel l'image de sortie enregistrée dans la partie d'image centrale (5) présente au moins partiellement une résolution plus élevée, en particulier au moins égale au double de la résolution dans la partie d'image périphérique (6).

9. Dispositif de caméra (2) selon la revendication 8, dans lequel l'optique grand angle possède une distorsion non uniforme qui est conçue pour obtenir la résolution au moins partiellement plus élevée dans la partie d'image centrale (5).

10. Dispositif de caméra (2) selon l'une quelconque des revendications précédentes, dans lequel l'optique grand angle comporte au moins ou exactement une lentille qui est réalisée au moins par sections sous forme panamorphique, et plus spécifiquement anamorphique.

11. Dispositif de caméra (2) selon l'une quelconque des revendications précédentes 6 à 10, dans lequel le système optoélectronique est conçu pour définir ladite au moins une partie d'image (4a) comme étant la partie d'image centrale (5) ou comme étant au moins une partie d'image périphérique (6) en fonction d'un espace de circulation situé à l'avant du véhicule concerné (1) et/ou de la catégorie de route sur laquelle se trouve actuellement le véhicule concerné (1).

12. Dispositif de caméra (2) selon l'une quelconque des revendications précédentes 6 à 11, dans lequel le système optoélectronique est conçu pour définir ladite au moins une partie d'image (4a) comme étant la partie d'image centrale (5) ou comme étant la partie d'image périphérique (6) en fonction d'une vitesse de véhicule actuelle déterminée et/ou d'un angle de braquage actuel du véhicule concerné (1).

13. Dispositif de caméra (2) selon l'une quelconque des revendications précédentes, dans lequel le dispositif de caméra (2) comprend au moins un dispositif d'assistance à un conducteur (7) qui est conçu pour évaluer au moins un objet cible à partir de ladite au moins une image résultante traitée (4) et pour exécuter au moins une fonction d'assistance à un conducteur en fonction dudit au moins un objet cible évalué.

14. Véhicule (1) comportant un dispositif de caméra selon l'une quelconque des revendications précédentes.

15. Procédé de fourniture d'une fonction d'assistance à un conducteur d'au moins un dispositif d'assistance à un conducteur (7) d'un véhicule concerné (1), comprenant les étapes consistant à :
- enregistrer au moins une image de sortie d'une zone environnementale du véhicule concerné (1) à l'aide d'un dispositif de caméra (2) selon l'une quelconque des revendications 1 à 13 précédentes ;
- générer, à partir de ladite au moins une image de sortie, une image résultante traitée (4), dans lequel l'image résultante traitée (4) présente, par rapport à l'image de sortie correspondante, au moins une partie d'image (4a) inchangée et une zone d'image restante (4b) à résolution réduite, adjacente à ladite au moins une partie d'image (4a), dans lequel l'image résultante ne présente qu'une quantité partielle du nombre total de pixels, dans lequel la quantité partielle délivrée correspond à l'image résultante traitée générée, et dans lequel la réduction de résolution de la zone d'image restante est effectuée au moyen d'un regroupement électronique de pixels et/ou d'un saut de pixels sur le capteur d'enregistrement d'image ;
- évaluer au moins un objet cible à partir de ladite au moins une image résultante traitée (4).
